# EUROPÄISCHE PATENTANMELDUNG

(11) **EP 4 235 471 A1**
(43) Veröffentlichungstag der Anmeldung: **30.08.2023**
(21) Anmeldenummer: 22168146.3
(22) Anmeldetag: 13.04.2022
(51) Int. Cl.: G06F 21/57, H04L 9/40

(54) **VERFAHREN UND SYSTEM ZUM DURCHFÜHREN EINES IT-SICHERHEITSTESTS EINES GERÄTS**

(30) Priorität: 28.02.2022 DE 102022202034
(71) Anmelder: Siemens Aktiengesellschaft, 80333 München (DE)
(72) Erfinder: Lukas, Klaus, 81739 München (DE); Riedmüller, Reinhard, 81735 München (DE)
(74) Vertreter: Siemens Patent Attorneys

(57) **Zusammenfassung**

Das Verfahren ist ein Verfahren zum Durchführen eines IT-Sicherheitstests eines Geräts. Bei dem Verfahren wird eine Datenbank mit einer oder mehreren Geräteeigenschaften zumindest des Geräts herangezogen und es wird eine Menge von Einzeltestkandidaten herangezogen, mittels welchen der IT-Sicherheitstest bildbar ist, wobei die Einzeltestkandidaten spezifisch für die eine oder mehreren Geräteeigenschaften sind. Bei dem Verfahren werden diejenigen Einzeltestkandidaten ausgewählt, welche für die eine oder mehreren Geräteeigenschaften des Geräts spezifisch sind und der IT-Sicherheitstest des Geräts wird mit den ausgewählten Einzeltestkandidaten als Einzeltests durchgeführt.

## Beschreibung

Die Erfindung betrifft ein Verfahren zum Durchführen eines IT-Sicherheitstests eines Geräts sowie mit einem System zur Durchführung eines IT-Sicherheitstests eines Geräts.

IT-Sicherheitstests von Geräten werden regelmäßig automatisiert durchgeführt.

Gleichwohl führen IT-Sicherheitstests zu unproduktivem Einsatz der den IT-Sicherheitstests unterworfenen Geräten, da die Geräte während des IT-Sicherheitstests häufig nicht für den Produktiveinsatz zur Verfügung stehen.

Es ist daher Aufgabe der Erfindung, ein Verfahren zum Durchführen eines IT-Sicherheitstests eines Geräts anzugeben, welches einen produktiveren Einsatz des Geräts zulässt. Zudem ist es Aufgabe der Erfindung, ein verbessertes System zur Durchführung eines IT-Sicherheitstests eines Geräts anzugeben, welches einen produktiveren Einsatz des Geräts zulässt.

Diese Aufgabe der Erfindung wird mit einem Verfahren zum Durchführen eines IT-Sicherheitstests eines Geräts mit den in Anspruch 1 angegebenen Merkmalen sowie mit einem System zur Durchführung eines IT-Sicherheitstests eines Geräts mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zum Durchführen eines IT-Sicherheitstests eines Geräts. Bei dem erfindungsgemäßen Verfahren wird eine Datenbank mit einer oder mehreren Geräteeigenschaften zumindest des Geräts herangezogen und es wird eine Menge von Einzeltestkandidaten herangezogen, mittels welchen der IT-Sicherheitstest bildbar ist, wobei die Einzeltestkandidaten spezifisch für die eine oder mehreren Geräteeigenschaften sind. Bei dem erfindungsgemäßen Verfahren werden diejenigen Einzeltestkandidaten ausgewählt, welche für die eine oder mehreren Geräteeigenschaften des Geräts spezifisch sind und der IT-Sicherheitstest des Geräts wird mit den ausgewählten Einzeltestkandidaten als Einzeltests durchgeführt.

Vorteilhaft kann bei dem erfindungsgemäßen Verfahren zum Durchführen eines IT-Sicherheitstests eine Beschränkung auf solche Einzeltestkandidaten als Einzeltests erfolgen, welche tatsächlich für das konkret dem IT-Sicherheitstest unterzogene Gerät relevant sind. Irrelevante Einzeltestkandidaten können bei der Durchführung des IT-Sicherheitstests außer Betracht bleiben. Folglich wird mit dem erfindungsgemäßen Verfahren die Effizienz bei der Durchführung des IT-Sicherheitstests erhöht.

Vorteilhaft ist das erfindungsgemäße Verfahren leicht automatisierbar. Eine manuelle Auswahl von Einzeltestkandidaten ist bei dem erfindungsgemäßen Verfahren vorteilhafterweise nicht erforderlich. Vielmehr kann mittels des erfindungsgemäßen Verfahrens automatisiert ein Abgleich der Einzeltestkandidaten mit den Geräteeigenschaften erfolgen, sodass der IT-Sicherheitstest ohne aufwendige Zusammenstellung der Einzeltestkandidaten durchführbar ist.

Bevorzugt wird bei dem erfindungsgemäßen Verfahren die Datenbank mit der einen oder mehreren Geräteeigenschaften vom Gerät stammend erhalten. Alternativ oder zusätzlich und ebenfalls bevorzugt wird bei dem Verfahren gemäß der Erfindung die Datenbank mit der einen oder mehreren Geräteeigenschaften vom Hersteller des Geräts stammend erhalten und/oder die Datenbank mit der einen oder mehreren Geräteeigenschaften von einer Nutzergruppe des Geräts oder einer sonstigen dritten Partei stammend erhalten. Mittels der vorgenannten Weiterbildungen des erfindungsgemäßen Verfahrens können die Geräteeigenschaften vom Gerät selbst erhalten, vorzugsweise ausgelesen, werden oder aber von dritter Seite erhalten werden. Werden die Geräteeigenschaften von dritter Seite erhalten, so können die Geräteeigenschaften effizient vom Hersteller oder von einer Nutzergruppe und somit von einer einzigen Stelle für eine Vielzahl von gleichartigen Geräten erhalten werden können und nicht individuell buchgehalten werden müssen. Insbesondere lassen sich mehrere der vorgenannten Quellen für Geräteeigenschaften miteinander kombinieren, sodass die Geräteeigenschaften besonders umfassend und zuverlässig erhalten werden können.

Bevorzugt umfassen bei dem Verfahren gemäß der Erfindung die eine oder mehreren Geräteeigenschaften Komponenten des Geräts und/oder Protokolle, zu welchen das Gerät befähigt ist, und/oder Firewalls, welche auf dem Gerät eingerichtet sind. Gerade die vorgenannten Geräteeigenschaften sind in an sich bekannter Weise für die IT-Sicherheit bedeutsam. So können fehlerhaft implementierte oder nicht aktuell gehaltene Protokolle die IT-Sicherheit des Geräts beeinträchtigen. Ferner können Komponenten, etwa Kommunikationskomponenten oder Komponenten mit Schnittstellen zur Umgebung Beeinträchtigungen der IT-Sicherheit des Geräts bedingen. In der vorgenannten Weiterbildung der Erfindung können folglich die vorgenannten Geräteeigenschaften für IT-Sicherheitstests geeignet berücksichtigt werden.

Zweckmäßig umfassen bei dem erfindungsgemäßen Verfahren die Geräteeigenschaften Sicherheitsinformationen zu Geräteeigenschaften wie vorhergehend beschrieben. Sicherheitsinformationen im Sinne dieser Weiterbildung der Erfindung sind Sicherheitsinformationen hinsichtlich der IT-Sicherheit.

Bei dem Verfahren gemäß der Erfindung werden bevorzugt diejenigen Einzeltestkandidaten derart ausgewählt, dass solche Einzeltestkandidaten, welche nicht für die eine oder mehreren Geräteeigenschaften des Geräts spezifisch sind, für den IT-Sicherheitstest des Geräts nicht herangezogen werden.

In dieser Weiterbildung der Erfindung können vorteilhaft sämtliche Einzeltestkandidaten außer Betracht bleiben, welche für die Geräteeigenschaften nicht spezifisch sind. Folglich kann der IT-Sicherheitstest mit deutlich verringertem Zeitund Ressourcenaufwand und insbesondere auch mit einer geringeren Ausfallzeit des Geräts anlässlich des Tests durchgeführt werden.

Bei dem Verfahren werden in einer vorteilhaften Weiterbildung der Erfindung solche Testergebnisse des IT-Sicherheitstests des Geräts verworfen, welche nicht für die eine oder mehreren Geräteeigenschaften des Geräts spezifisch sind.

Vorteilhaft können in dieser Weiterbildung der Erfindung die Testergebnisse auf die geräterelevanten Testergebnisse beschränkt werden. Folglich ist der Kommunikations- und Speicheraufwand zur Kommunikation und Speicherung der Testergebnisse vorteilhaft reduziert. Besonders vorteilhaft ergibt sich ein Effizienzgewinn bei einer iterativen Durchführung des IT-Sicherheitstests. Denn aufgrund der Beschränkung auf geräterelevante Testergebnisse können auch nachfolgende IT-Sicherheitstests, welche auf den Testergebnissen des erfindungsgemäß durchgeführten IT-Sicherheitstests aufbauen, fokussiert auf den geräterelevanten Testergebnissen aufsetzten. Entsprechend vergrößert sich der reduzierte Kommunikationsund Speicheraufwand bei iterativer Durchführung des IT-Sicherheitstests weiter.

Das erfindungsgemäße System ist zur Durchführung eines erfindungsgemäßen IT-Sicherheitstests eines Geräts mittels eines erfindungsgemäßen Verfahrens wie vorhergehend beschrieben ausgebildet und eingerichtet. Das erfindungsgemäße System weist einen Speicher für einen Datenbank mit einer oder mehreren Geräteeigenschaften zumindest eines Geräts sowie eine Testkandidateninformation, enthaltend Informationen über eine Menge von Einzeltestkandidaten, mittels welchen der IT-Sicherheitstest bildbar ist, und eine Auswahleinrichtung, welche zur Auswahl derjenigen Testkandidaten der Testkandidateninformation, welche für die eine oder mehreren Geräteeigenschaften spezifisch sind, sowie eine Testplattform, welche zur Durchführung des IT-Sicherheitstests mit den ausgewählten Einzeltestkandidaten eingerichtet ist, auf. Es ergeben sich für das erfindungsgemäße System dieselben Vorteile wie bereits bei der Beschreibung des erfindungsgemäßen Verfahrens erläutert.

Bei dem erfindungsgemäßen System ist die Auswahleinrichtung vorzugsweise ausgebildet, solche Einzeltestkandidaten, welche für die eine oder mehreren Geräteeigenschaften nicht spezifisch sind, zu verwerfen. Mittels des Verwerfens einiger, mehrerer oder aller Einzeltestkandidaten, welche für die eine oder mehreren Geräteeigenschaften nicht spezifisch sind, lässt sich der IT-Sicherheitstest folglich deutlich effizienter durchführen.

System nach dem vorhergehenden Anspruch, bei welchem die Testplattform ausgebildet ist, Testergebnisse des IT-Sicherheitstests, welche nicht für die eine oder mehreren Geräteeigenschaften des Geräts spezifisch sind, zu verwerfen. Infolge des Verwerfens der nicht geräterelevanten Testergebnisse des IT-Sicherheitstests wird der Kommunikations- und Speicheraufwand zur Kommunikation und zur Speicherung der Testergebnisse deutlich reduziert.

Bei dem erfindungsgemäßen enthält der Speicher des Systems zweckmäßig die Datenbank oder das System weist eine Schnittstelle auf, die Datenbank entgegenzunehmen und in dem Speicher zu speichern. Mittels der Schnittstelle kann die Datenbank entweder vom Gerät selbst oder von dritter Seite, etwa vom Hersteller des Geräts oder von einer Nutzergemeinde des Geräts erhalten werden.

Die erfindungsgemäße Fertigungsanlage sowie die erfindungsgemäße Wartungsanlage und die erfindungsgemäße Logistikanlage weisen jeweils ein erfindungsgemäßes System wie vorhergehend beschrieben auf. Insbesondere für Geräte in Fertigungsanlagen, Wartungsanlagen und Logistikanlagen lässt sich das erfindungsgemäße System besonders vorteilhaft einsetzen, da in Fertigungsanlagen, Wartungsanlagen und Logistikanlagen in an sich bekannter Weise eine Mehrzahl oder Vielzahl von Geräten verwendet wird, welche jeweils einem IT-Sicherheitstest zu unterziehen sind. Die erfindungsgemäßen Vorteile multiplizieren sich entsprechend mit der Anzahl von Geräten in solchen Fertigungsanlagen, Wartungsanlagen und/oder Logistikanlagen. Zudem lassen sich die IT-Sicherheitstests mittels des erfindungsgemäßen Systems und/oder mittels des erfindungsgemäßen Verfahrens besonders zeitsparend durchführen, sodass unproduktive Zeiten, in welchen dem IT-Sicherheitstest jeweils unterzogene Geräte zur sonstigen Nutzung nicht zur Verfügung stehen, gering gehalten werden kann.

Nachfolgend wird die Erfindung anhand eines in der Zeichnung dargestellten Ausführungsbeispiels näher erläutert. Die einzige Zeichnungsfigur 1 zeigt einen Ablauf eines erfindungsgemäßen Verfahrens zum Durchführen eines IT-Sicherheitstests eines Geräts schematisch in einem Ablaufdiagramm.

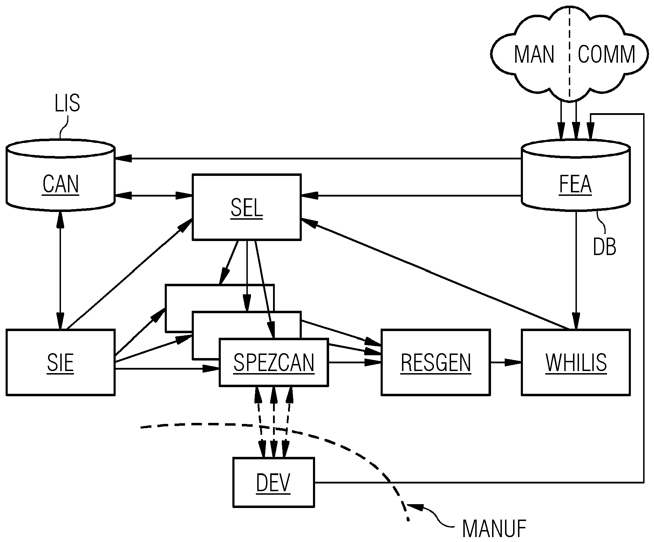

Das in Fig. 1 dargestellte Ablaufdiagramm zeigt einen Ablauf eines IT-Sicherheitstests eines Geräts DEV in Gestalt eines Fertigungsgeräts, etwa eines programmiergesteuerten Fräsers, einer mittels eines IoT-Netzwerks vernetzten Fertigungsanlage MANUF. Alternativ kann das Gerät auch ein Logistikgerät, etwa ein mobiler Lagerroboter, einer mittels eines IoT-Netzwerks vernetzten Logistikanlage oder ein Wartungsgerät, etwa ein Wartungsroboter, einer mittels eines IoT-Netzwerks vernetzten Wartungsanlage sein.

Das Gerät DEV ist Gegenstand eines IT-Sicherheitstests, welcher mit einer Testplattform SIE durchgeführt wird. Die Testplattform SIE führt IT-Sicherheitstests mittels einer Reihe von Einzeltests CAN durch, welche in einer Liste LIS von Einzeltests CAN verzeichnet sind. Die Liste von Einzeltests CAN ist entweder durch die Testplattform SIE vorgegeben oder wird von der Testplattform SIE verwaltet. Beispielsweise sind ein oder mehrere oder sämtliche Einzeltests CAN als kommerzielle Testlösungen am Markt erhältlich und werden mittels der Testplattform verwaltet und bedarfsweise bei der Durchführung von IT-Sicherheitstests eingesetzt.

Die Einzeltests CAN sind sowohl durch die eingesetzten Testwerkzeuge, als auch durch die jeweils geprüften Testfälle, in welchen die Testwerkzeuge zum Einsatz kommen, gekennzeichnet. Zum Gerät liegen mehrere Geräteeigenschaften FEA vor, die in einer Datenbank DB von Geräteeigenschaften FEA gespeichert sind. Bei den Geräteeigenschaften handelt es sich einerseits um Komponenten des Geräts DEV, hier beispielsweise einer Programmier- und Steuerschnittstelle, des programmiergesteuerten Fräsers. Die Programmier- und Steuerschnittstelle des Fräsers ist zudem zur Kommunikation mittels Protokolle befähigt, welche zur Entgegennahme von Steuerbefehlen dienen. Solche Protokolle können beispielsweise mit einem Industriesteuerprotokoll, etwa OPC UA, gebildet sein. Auch zur Entgegennahme von Programmierbefehlen ist die Programmier- und Steuerschnittstelle mit hierzu geeigneten und an sich bekannten Protokollen eingerichtet und ausgebildet. Die vorgenannten Protokolle, zu welchen das Gerät DEV befähigt ist, bilden ebenfalls Geräteeigenschaften FEA im Sinne der vorliegenden Erfindung. Zudem bilden Sicherheitsinformationen zu vorgenannten Geräteeigenschaften FEA weitere Geräteeigenschaften FEA, beispielsweise ein Patchdatum oder ein Aktualisierungsdatum zu Programmroutinen, welche die Kommunikation mittels der vorgenannten Protokolle bewerkstelligen. Zusätzlich bilden offene Ports des Geräts DEV weitere Geräteeigenschaften FEA.

Die Geräteeigenschaften FEA können einerseits mittels eines Selbsttests des Geräts DEV bereitgestellt werden, etwa mittels einer Prüfroutine beim Hochfahren des Geräts DEV, mittels welcher geprüft wird, welche Komponenten des Geräts DEV tatsächlich aktuell in das Gerät DEV eingebunden sind, und mittels welcher geprüft wird, welche Ports des Geräts DEV geöffnet sind und welche Protokolle vom Gerät DEV in welcher Version verstanden werden. Die Prüfroutine des Geräts DEV kann solche Informationen in einem Logfile oder in einem internen Speicher sammeln und auf autorisierte Anfrage eines dazu berechtigen Nutzers oder eines berechtigten Kommunikationspartners über eine Kommunikationsschnittstelle des Geräts DEV ausgeben.

Die ausgegebenen Geräteeigenschaften werden nun in der Datenbank DB von Geräteeigenschaften FEA gespeichert. Die Datenbank DB wird für die Dauer der Durchführung des Verfahrens in einem Speicher der Testplattform SIE eingelesen und vorgehalten. Die Testplattform SIE weist zu diesem Zweck eine Schnittstelle auf, mittels welcher die Datenbank DB entgegengenommen und in den Speicher der Testplattform SIE gespeichert werden kann.

Zusätzliche Geräteeigenschaften FEA des Geräts DEV können aus weiteren Quellen COMM, etwa aus Internetdatenbanken, die von einer Nutzergemeinde des Geräts DEV gepflegt werden, abgerufen werden und ebenfalls in der Datenbank DB von Geräteeigenschaften FEA abgelegt werden.

Zudem können weitere Geräteeigenschaften FEA des Geräts DEV von einem Hersteller MAN des Geräts DEV erfahren werden, indem diese Geräteeigenschaften FEA als Liste vom Hersteller MAN bezogen werden. Auch diese weiteren Geräteeigenschaften FEA werden in die Datenbank DB von Geräteeigenschaften FEA eingepflegt.

Die Geräteeigenschaften FEA des Geräts DEV werden zudem der Liste LIS von Einzeltests CAN der Testplattform SIE übermittelt, sodass die Liste LIS von Einzeltests CAN optional in weiteren, nicht eigens dargestellten Ausführungsbeispielen um neuartige Einzeltests CAN erweitert werden kann, falls keiner der bislang verfügbaren Einzeltests CAN die Geräteeigenschaft FEA testet. Es lassen sich somit solche neuartigen Einzeltests zusätzlich heranziehen, welche die Geräteeigenschaft FEA testen.

Die Liste LIS der zur Verfügung stehenden Einzeltests CAN wird im dargestellten Ausführungsbeispiel einer Auswahleinrichtung SEL übermittelt. Zusätzlich werden der Auswahleinrichtung SEL die Geräteeigenschaften FEA der Datenbank DB von Geräteeigenschaften FEA des Geräts DEV übermittelt. Die Auswahleinrichtung SEL gleicht nun die Einzeltests CAN mit den Geräteeigenschaften FEA ab und wählt aus der Liste LIS der Einzeltests CAN diejenigen gerätespezifischen Einzeltests SPEZCAN aus, welche spezifisch für die Geräteeigenschaften FEA sind, d. h. welche jeweils mindestens eine Geräteeigenschaft FEA der Geräteeigenschaften FEA testen.

Die mittels der Auswahleinrichtung SEL ausgewählten gerätespezifischen Einzeltests SPEZCAN bilden nun gemeinsam einen IT-Sicherheitstest des Geräts DEV: Das Gerät DEV wird diesem IT-Sicherheitstest unterzogen und bei diesem IT-Sicherheitstest erhaltene Testergebnisse RESGEN werden in einem Ergebnisspeicher gehalten.

Nachfolgend werden die Testergebnisse RESGEN mit dem Geräteeigenschaften FEA der Datenbank DB abgeglichen. Dabei werden im weiteren Verlauf des Verfahrens in einem Ergebnisauswahlschritt WHILIS nur diejenigen Testergebnisse RESGEN berücksichtigt, die spezifisch für die Geräteeigenschaften FEA sind, d. h. welche IT-Sicherheits-Informationen zu den Geräteeigenschaften FEA enthalten.

Grundsätzlich können auch gerätespezifische Einzeltests SPEZCAN in Testergebnissen resultieren, von denen lediglich eine echte Teilmenge, also nicht sämtliche Testergebnisse, IT-Sicherheits-Informationen zu den Geräteeigenschaften FEA enthalten, während andere der Testergebnisse Resultate allgemeiner Natur enthalten. Letztere werden bei dem dargestellten Ausführungsbeispiel im Ergebnisauswahlschritt WHILIS verworfen.

## Patentansprüche

1. Verfahren zum Durchführen eines IT-Sicherheitstests eines Geräts (DEV), bei welchem
- eine Datenbank (DB) mit einer oder mehreren Geräteeigenschaften (FEA) zumindest des Geräts (DEV) herangezogen wird,
- eine Menge von Einzeltestkandidaten (CAN) herangezogen wird, mittels welchen der IT-Sicherheitstest bildbar ist, wobei Einzeltestkandidaten (SPEZCAN) spezifisch für die eine oder mehreren Geräteeigenschaften (FEA) sind,
- diejenigen Einzeltestkandidaten (SPEZCAN), insbesondere von einer Auswahleinrichtung (SEL), ausgewählt werden, welche für die eine oder mehreren Geräteeigenschaften (FEA) des Geräts (DEV) spezifisch sind,
- und der IT-Sicherheitstest des Geräts (DEV) mit den ausgewählten Einzeltestkandidaten (SPEZCAN) durchgeführt wird.

2. Verfahren nach einem der vorhergehenden Ansprüche, bei welchem die Datenbank (DB) mit der einen oder mehreren Geräteeigenschaften (FEA) vom Gerät (DEV) stammend erhalten wird.

3. Verfahren nach einem der vorhergehenden Ansprüche, bei welchem die Datenbank (DB) mit der einen oder mehreren Geräteeigenschaften (FEA) vom Hersteller (MAN) des Geräts (DEV) stammend erhalten wird.

4. Verfahren nach einem der vorhergehenden Ansprüche, bei welchem die Datenbank (DB) mit der einen oder mehreren Geräteeigenschaften (FEA) von einer Nutzergruppe (COMM) des Geräts (DEV) oder einer sonstigen dritten Partei stammend erhalten wird.

5. Verfahren nach einem der vorhergehenden Ansprüche, bei welchem die eine oder mehreren Geräteeigenschaften (FEA) Komponenten des Geräts (DEV) und/oder Protokolle, zu welchen das Gerät (FEA) befähigt ist, und/oder Firewalls, welche auf dem Gerät (DEV) eingerichtet sind, umfassen.

6. Verfahren nach einem der vorhergehenden Ansprüche, bei welchem die Geräteeigenschaften (FEA) Sicherheitsinformationen zu Geräteeigenschaften (FEA) nach dem vorhergehenden Anspruch umfassen.

7. Verfahren nach einem der vorhergehenden Ansprüche, bei welchem diejenigen Einzeltestkandidaten (CAN) derart ausgewählt werden, dass solche Einzeltestkandidaten (CAN), welche nicht für die eine oder mehreren Geräteeigenschaften (FEA) des Geräts (DEV) spezifisch sind, für den IT-Sicherheitstest des Geräts (DEV) nicht herangezogen werden.

8. Verfahren nach einem der vorhergehenden Ansprüche, bei welchem Testergebnisse (RESGEN) des IT-Sicherheitstests des Geräts (DEV), insbesondere in einem Ergebnisauswahlschritt (WHILIS), verworfen werden, welche nicht für die eine oder mehreren Geräteeigenschaften (FEA) des Geräts (DEV) spezifisch sind.

9. System zur Durchführung eines IT-Sicherheitstests eines Geräts (DEV) mittels eines Verfahrens nach einem der vorhergehenden Ansprüche, aufweisend
- einen Speicher für einen Datenbank (DB) mit einer oder mehreren Geräteeigenschaften zumindest eines Geräts (DEV),
- eine Testkandidateninformation (LIS), enthaltend Informationen über eine Menge von Einzeltestkandidaten (CAN), mittels welchen der IT-Sicherheitstest bildbar ist,
- eine Auswahleinrichtung (SEL), welche zur Auswahl derjenigen Einzeltestkandidaten (SPEZCAN) der Testkandidateninformation (LIS), welche für die eine oder mehreren Geräteeigenschaften (FEA) spezifisch sind,
- eine Testplattform (SIE), welche zur Durchführung des IT-Sicherheitstests mit den ausgewählten Einzeltestkandidaten (SPEZCAN) eingerichtet ist.

10. System nach dem vorhergehenden Anspruch, bei welchem die Auswahleinrichtung (SEL) ausgebildet ist, solche Einzeltestkandidaten (CAN), welche für die eine oder mehreren Geräteeigenschaften (FEA) nicht spezifisch sind, zu verwerfen.

11. System nach dem vorhergehenden Anspruch, bei welchem die Testplattform (SIE) ausgebildet ist, Testergebnisse (RESGEN) des IT-Sicherheitstests, welche nicht für die eine oder mehreren Geräteeigenschaften (FEA) des Geräts (DEV) spezifisch sind, zu verwerfen.

12. System nach dem vorhergehenden Anspruch, bei welchem der Speicher des Systems die Datenbank (DB) enthält oder bei welchem das System eine Schnittstelle aufweist, die Datenbank (DB) entgegenzunehmen und in dem Speicher zu speichern.

13. Fertigungsanlage und/oder Wartungsanlage und/oder Logistikanlage mit einem System nach einem der vorhergehenden Ansprüche.
